Europäisches Patentamt

European Patent Office

Office européen des brevets

(19)

(11) Veröffentlichungsnummer: **0 337 111 B1**

(12) # EUROPÄISCHE PATENTSCHRIFT

(45) Veröffentlichungstag der Patentschrift :
27.12.91 Patentblatt 91/52

(51) Int. Cl.⁵ : **B62D 55/00**, B60K 17/10,
F16H 61/46

(21) Anmeldenummer : 89104089.1

(22) Anmeldetag : 08.03.89

(54) Raupenfahrzeug mit Haupt- und Zusatztreibrädern.

(30) Priorität : 17.03.88 US 169528

(43) Veröffentlichungstag der Anmeldung :
18.10.89 Patentblatt 89/42

(45) Bekanntmachung des Hinweises auf die
Patenterteilung :
27.12.91 Patentblatt 91/52

(84) Benannte Vertragsstaaten :
DE FR GB IT

(56) Entgegenhaltungen :
DE-A- 3 246 208
DE-C- 526 872
DE-C- 2 921 698
DE-C- 2 921 756
US-A- 4 186 816

(73) Patentinhaber : **DEERE & COMPANY**
1 John Deere Road
Moline, Illinois 61265 (US)

(72) Erfinder : **Moriarty, Kevin Joseph**
42 Hillcrest Avenue
Davenport Iowa 52803 (US)

(74) Vertreter : Feldmann, Bernhard et al
DEERE & COMPANY European Office, Patent
Department Steubenstrasse 36-42 Postfach
503
W-6800 Mannheim 1 (DE)

## Beschreibung

Die Erfindung betrifft ein Raupenfahrzeug mit Antrieb und Getriebe, welche wenigstens eine als Endlosriemen ausgebildete Riemenlaufbahn mit Hilfe wenigstens eines mit der Riemenlaufbahn in Eingriff stehenden Haupttreibrades antreiben, und wenigstens einem Zusatztreibrad, welches ebenfalls antreibbar ist und mit der Riemenlaufbahn in Eingriff steht. Ein Raupenfahrzeug, bei dem ein und dieselbe Gleiskette an mindestens zwei Stellen durch je ein Kettenrad angetrieben wird, ist durch die DE-C-526872 bekannt geworden.

Konventionelle Raupenfahrzeuge sind gewöhnlich mit Gleisbahnen aus Stahlsegmenten ausgestattet, bei denen Stahlkettenglieder zu einer Stahlgleiskette zusammengefügt sind. Die Gleiskette wird durch eine Zahntrommel formschlüssig angetrieben, wobei die Zahntrommel über ein Getriebe mit einem Verbrennungsmotor gekoppelt ist.

Vor geraumer Zeit wurde vorgeschlagen, endlose Riemenlaufbahnen, auch Riemengleisbahnen genannt, aus elastomerischem Material zu bilden. Derartige Gleisbahnen haben einige Vorteile. Ein solcher Vorteil liegt darin, daß die Riemengleisbahnen es einem Raupenfahrzeug erlauben, über Straßen und Bordsteine zu fahren, ohne diese aufzureißen oder zu beschädigen, wie dies durch die Stahlstollen konventioneller Raupenfahrzeuge geschehen kann. Es sind zwei Systeme für Riemengleisbahnen bekannt geworden, die bei Baumaschinen bzw. landwirtschaftlichen Maschinen Anwendung finden. So beschreibt beispielsweise die US-PS 4,678,244 eine Gleisbahn, welche eine Reihe von Spalten aufweist, in die eine gezahnte Betriebstrommel eingreift, um die Gleisbahn formschlüssig anzutreiben. Jeder der Spalte ist durch Stahleinsätze verstärkt. Ein weiteres System für Riemengleisbahnen eines landwirtschaftlichen Schleppers geht aus der PCT-Anmeldung WO 85/02824 hervor. Bei diesem Gleisbahnsystem steht die Riemengleisbahn mit einem gummiüberzogenen Antriebsrad in Verbindung. Das Antriebsrad ist am hinteren Ende des Schleppers angeordnet. Am vorderen Ende des Schleppers ist eine pneumatische Reifenspannrolle angeordnet. Die Gleisbahn steht unter großen Zugspannungskräften und wird durch Reibungskräfte durch das Antriebsrad angetrieben.

Mittels Reibung angetriebene Riemengleisbahnen, wie sie soeben beschrieben wurden, liefern für Vorwärts- und Rückwärtsfahrt nicht die gleiche Leistungsfähigkeit. Bei Vorwärtsfahrt tritt die kleinste Spannung im Riemen am oberen Teil der Gleisbahn auf, während die maximale Spannung sich im unteren Bereich des Riemens einstellt, wo der Kontakt mit den Treibrädern besteht. In umgekehrter Richtung, also bei Rückwärtsfahrt, ist das Gegenteil der Fall. Hier tritt die maximale Spannung im oberen Bereich des Riemens auf, wohingegen die minimale Spannung sich an der unteren Kontaktstelle mit dem Treibrad einstellt. Aus diesem Grunde hat der Schlepper einen größeren Vorwärtsschub als Rückwärtsschub.

Das maximale Schubpotential des Gleisbahnsystems ist proportional zur statischen Vorspannung der Gleisbahn. Aus diesem Grunde ist es insbesondere bei großen, schweren Fahrzeugen erforderlich, hohe Zugspannungen an die Gleisbahnen anzulegen, um genügend große Rückwärtsschübe anlegen zu können. Hohe Vorspannungen der Gleisbahnen erfordern jedoch verstärkte Rahmenkonstruktionen für das die Gleisbahn aufnehmende Fahrgestell, um die hohen Zugbelastungen aufnehmen zu können.

Ein Verfahren, durch das sich die Leistungscharakteristik sowohl für Vorwärts- als auch für Rückwärtsfahrt annähern läßt, ergibt sich daraus, daß alle vier Räder der Gleisbahn angetrieben werden. So offenbart die US-PS 4,560,018 einen Tandemantriebsmechanismus, durch den ein nahtloser, elastomerischer Riemen angetrieben wird. Der vorgeschlagene Mechanismus liefert ein größeres Drehmoment zu den Hinterrädern als zu den Vorderrädern.

Die Aufgabe der Erfindung wird darin gesehen, ein Raupenfahrzeug der eingangs genannten Art anzugeben, dessen Schub bei Vorwärts- und Rückwärtsfahrt etwa gleich große Werte annimmt, und bei dem Unterschiede der Riemenspannungskräfte weitgehend ausgeglichen werden.

Die Aufgabe wird erfindungsgemäß durch die kennzeichnenden Merkmale des Hauptanspruches gelöst. Demgemäß treibt die Antriebsmaschine des Raupenfahrzeuges neben den Haupttreibrädern auch eine Hydraulikpumpe an, bei der es sich vorzugsweise um eine reversible Verstellpumpe handelt. Die Hydraulikpumpe liefert Hydraulikflüssigkeit an Hydromotoren, durch welche die vorderen Zusatztreibräder antreibbar sind. Der Flüssigkeitsausstoß der Pumpen wird durch eine elektronische Steuereinrichtung derart gesteuert, daß die Hydromotoren die Zusatztreibräder mit einer von der Haupttreibradgeschwindigkeit abweichenden Geschwindigkeit antreiben.

Die Ausflußmenge der Hydromotoren wird vorzugsweise so eingestellt, daß die Geschwindigkeit der Zusatztreibräder zwischen 97 und 99% der Geschwindigkeit der Haupttreibräder liegt. In einer weiteren bevorzugten Ausführungsart liegt die Geschwindigkeit der Zusatztreibräder bei Vorwärtsfahrt zwischen 97 und 99% der Geschwindigkeit der Haupttreibräder, und bei Rückwärtsfahrt zwischen 100 und 101% der Geschwindigkeit der Haupttreibräder.

Dieses hydraulische Steuersystem ist ähnlich einem Steuersystem, welches im Zusammenhang mit Motorgradern mit sechs angetriebenen Rädern durch die DE-PS 2921698, DE-PS 2921756, US-PS 4,546,844 und

EP 0 337 111 B1

US-PS 4,635,743 bekannt geworden ist. Bei diesen Motorgradern werden hydraulische Achsenantriebsmotoren verwendet, um neben den vier Hinterrädern auch die Vorderräder anzutreiben. Bei diesen Systemen werden durch eine elektrische Steuereinrichtung, welche Radgeschwindigkeitssensoren enthält, automatisch die Vorderräder bei einem vorgebbaren Prozentsatz der Hinterradantriebsräder angetrieben. Die vorderen Antriebsräder werden entweder bei einem normalen Modus bei 97 bis 99% der Geschwindigkeit der Hauptantriebsräder oder in einem aggressiven Modus bei 101 bis 103% der Geschwindigkeit der Hauptantriebsräder angetrieben. Bei normalem Modus treten die Vorderräder nur dann in Eingriff, wenn die hinteren Räder schlupfen. Im aggressiven Modus versuchen die vorderen Räder, ständig das Fahrzeug zu ziehen.

Die erfinderische Leistung wird darin gesehen, ein derartiges Antriebssystem auf Raupenfahrzeuge mit angetriebenen Riemengleisbahnen zu übertragen, bei denen die Kraftübertragung zwischen Krafträdern und Riemen durch Reibung erfolgt. Die Anwendung des Antriebssystems löst das Problem unterschiedlicher Riemenspannungen in unterschiedlichen Riemenbereichen. Anregungen für diese Problemlösung sind weder den bekannten Raupenfahrzeugen noch den genannten, die Grader betreffenden Patentschriften entnehmbar.

Bei einer bevorzugten Ausgestaltung der Erfindung ist jeder der Hydromotoren mit einer Hydraulikkupplung ausgestattet, mit welcher sich der entsprechende Hydromotor mit dem zugehörigen Zusatztreibrad verbinden bzw. von diesem lösen läßt. Die Kupplungen sind hydraulisch mit dem Hydraulikausgang der Pumpe über eine Ventilanordnung verbunden, wobei die Ventilanordnung vorzugsweise zwei Paare von elektromagnetisch betätigten Kupplungsventilen mit zwei Positionen enthält. Jedes dieser Ventilpaare steht mit jeweils einem Hydromotor in Verbindung. Das erste Ventil eines jeden Paares sorgt dafür, daß die Kupplung einrückt, wenn das Raupenfahrzeug in Vorwärtsrichtung fährt, während das zweite Ventil eines jeden Paares die Kupplung dann in Eingriff bringt, wenn das Raupenfahrzeug in Rückwärtsrichtung angetrieben wird.

Zweckmäßigerweise werden die beiden Ventile eines jeden Paares durch ein Wechselrückschlagventil miteinander gekoppelt.

Eine weitere vorteilhafte Ausgestaltung der Erfindung ergibt sich durch zwei elektromagnetisch betätigbare Hydromotorventile mit zwei Positionen, von denen jedes mit einem Hydromotor in Verbindung steht. Die Hydromotorventile werden dazu benutzt, den Hydromotor hydraulisch von der Pumpe zu trennen, wenn der Hydromotor entlastet ist.

Die elektronische Steuereinrichtung enthält vorzugsweise Geschwindigkeitssensoren, durch die die Geschwindigkeiten der Haupttreibräder sowie die Geschwindigkeiten der Zusatztreibräder erfaßt werden können.

Die Steuerung des Raupenfahrzeuges erfolgt durch Verlangsamung, Anhalten oder Zurückdrehen einer der beiden Riemenlaufbahnen, während die andere Riemenlaufbahn weiterhin angetrieben wird. Die Steuerung kann durch ein übliches Kupplungs/Bremssystem, eine hydrostatisch angetriebene Riemenlaufbahn oder einen Ausgleichssteuermechanismus entsprechend der US-PS 4,434,680 ausgeführt werden. Die Steuereinrichtung wird dabei vorzugsweise mit Steuerungsschaltern ausgestattet, welche bei einem Lenkbefehl ausgelöst werden und den zugehörigen Hydromotor in Betrieb setzen. Durch die Steuerungsschalter werden vor allem die zugehörigen Kupplungsventile und das Hydromotorventil von der Stromquelle getrennt, so daß der Hydromotor von den Treibrädern entkoppelt wird und sein Hydrozufluß von der Pumpe unterbrochen wird.

Vorzugsweise enthält die Steuereinrichtung zwei Sensoren zur Erfassung der Geschwindigkeit der Haupttreibräder und der Spannrollen. Die Spannrollendrehzahlmeßeinrichtung umfaßt zwei Sensoren, von denen jeder die Geschwindigkeit einer der Spannrollen erfaßt. Die Sensoren stehen mit einem Auswahlschalter in Verbindung, welcher durch den Lenkmechanismus derart gesteuert wird, daß von der Steuereinheit jeweils die Geschwindigkeit des angetriebenen Rades erfaßt wird. Eine derartige Auswahlschaltanordnung kann auch bei der Erfassung der Geschwindigkeit der Haupttreibräder Anwendung finden. In der bevorzugten Ausgestaltung der Erfindung wird für die Erfassung der Haupttreibräder jedoch lediglich ein Sensor verwendet, welcher die Ausgangsdrehzahl des Getriebes vor Aufspaltung auf die beiden Haupttreibräder erfaßt.

Anhand der Zeichnung, in der ein Ausführungsbeispiel der Erfindung gezeigt ist, sollen die Erfindung sowie weitere vorteilhafte Ausgestaltungen und Weiterbildungen der Erfindung beschrieben und näher erläutert werden.

Es zeigt :

Fig. 1     die Seitenansicht eines Raupenfahrzeuges mit Riemenlaufbahnen, wobei die fugenlosen Riemen aus elastomerischem Material bestehen,

Fig. 2     ein hydraulisches und elektrisches Schaltbild der Erfindung deren Schaltzustände einer vorwärts gerichteten Geradeausfahrt des Raupenfahrzeuges entspricht,

Fig. 3     ein Schaltbild entsprechend Fig. 2, bei dem die Schaltzustände einer rückwärts gerichteten Geradeausfahrt des Raupenfahrzeuges entsprechen,

Fig. 4     ein Schaltbild gemäß Fig. 2, bei dem die Schaltzustände einer vorwärts gerichteten Kurvenfahrt des

3

EP 0 337 111 B1

Raupenfahrzeuges entsprechen und

Fig. 5    ein elektrisches Schaltschema der Geschwindigkeitssensoren für die vorderen Leiträder.

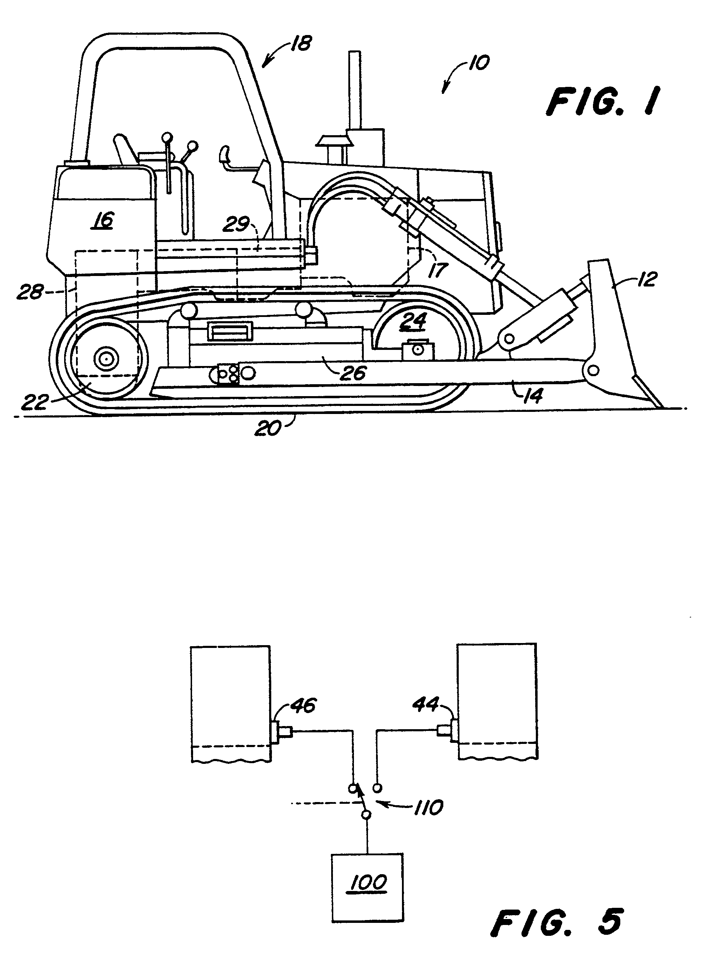

Die Fig. 1 stellt ein Raupenfahrzeug 10 dar, an welchem durch Gestänge 14 eine Planierraupenschaufel 12 befestigt ist. Das Fahrzeug 10 ist mit einem Rahmen 16 ausgestattet, welcher einen Verbrennungsmotor 17, angedeutet durch Phantomlinien, aufnimmt, und einen Bedienungsstand 18 bildet. Das Fahrzeug 10 wird durch Riemenlaufbahnen 20 aus gummiartigem Material angetrieben. Jede Riemenlaufbahn 20 steht reibend mit einem Haupttreibrad 22 und einem Zusatztreibrad 24 in Eingriff. Haupttreibrad 22 und Zusatztreibrad 24 fluchten in Längsrichtung des Fahrzeuges 10 miteinander. Die Riemenlaufbahn 20 wird durch eine Spann- und Entspannanordnung 26 gespannt. Die Riemenlaufbahn 20 weist Zentriermittel auf, die den Riemen 20 auf den Treibrädern 22, 24 führen. Ferner weist der Riemen Stollen auf, die in reibendem Eingriff mit dem Untergrund stehen.

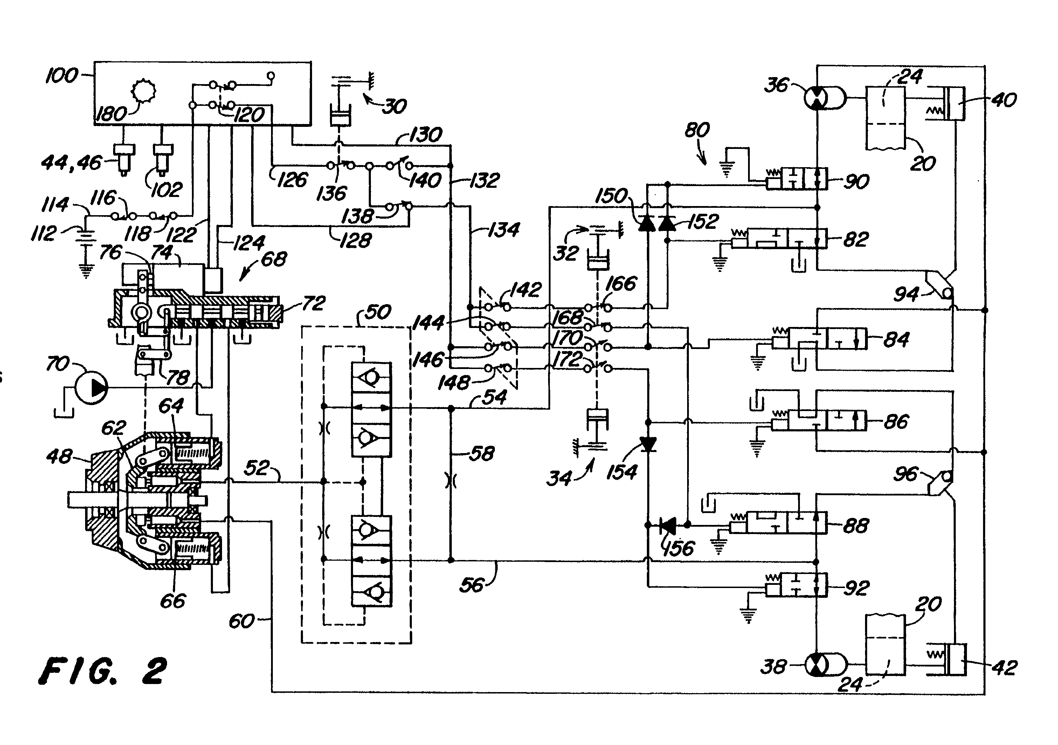

Die Haupttreibräder 22 sind mit einem Kupplungsbremsensteuersystem 28 (dargestellt durch Phantomlinien) üblicher Bauart verbunden, die ihrerseits an ein Lastschaltgetriebe 29 (durch Phantomlinien dargestellt) verbunden sind, welches an die Ausgangswelle des Motors 17 angeflanscht ist. Das Getriebe 29 umfaßt eine Hauptantriebskupplung 30 (siehe Fig. 2-4), welche das Getriebe 29 immer dann auskuppelt, wenn das Kupplungspedal in dem Bedienungsstand 18 niedergedrückt wird. Ferner enthält das Getriebe 29 eine Vorwärtsfahrtkupplung 32 und eine Rückwärtsfahrtbremse 34. Die Vorwärtsfahrtkupplung 32 wird immer dann betätigt, wenn der in dem Bedienungsstand 18 angeordnete Richtungswahlhebel aus seiner neutralen Stellung in seine Vorwärtsfahrstellung, bei der ein Vorwärtsgang des Getriebes eingelegt wird, gebracht wird. Die Rückwärtsfahrtbremse 34 wird immer dann betätigt, wenn der Richtungswahlhebel aus der Neutralstellung in eine Rückwärtsfahrtstellung, bei der ein Rückwärtsgang des Getriebes eingelegt wird, gebracht wird. Ein Getriebe dieser Art ist in der US-PS 3,298,252 gezeigt und wird hier daher nicht näher beschrieben.

Das rechte und das linke Zusatztreibrad 24 werden durch rechte und linke hydraulische Achsenantriebsmotoren (Hydromotoren) 36, 38 angetrieben. Die Hydromotoren 36, 38 sind am Raupenfahrzeugrahmen 16 befestigt und enthalten rechte und linke Hydraulikkupplungen 40, 42, die sich in Ruhestellung im ausgekuppelten Zustand befinden, jedoch bei Druckbeaufschlagung den Ausgangsantrieb der Hydromotoren mit den zugehörigen Rädern verbinden. Jeder der Hydromotoren 36, 38 ist mit einem rechten bzw. linken elektronischen Geschwindigkeitssensor 44, 46 ausgerüstet, welche wahlweise ein elektronisches gepulstes Signal liefern, das proportional zur Umdrehungsgeschwindigkeit des Hydromotors 36, 38 ist.

Eine reversible variable Verdrängungspumpe (Verstellpumpe) 48 liefert die Hydraulikflüssigkeit für die Hydromotoren 36, 38. Die Verstellpumpe weist eine obere Öffnung auf, die durch eine Speise/Rückführungsleitung 52 mit einer Seite eines Strömungsteiler- bzw. Strömungsvereinigerventils 50 verbunden ist. Das Strömungsteiler- bzw. Strömungsvereinigerventil 50 weist an seiner gegenüberliegenden Seite zwei Öffnungen auf, welche mit der ersten Arbeitsöffnung der Hydromotoren 36, 38 durch Speise/Rückführungsleitungen 54, 56 verbunden sind. Die Speise/Rückführungsleitungen 54 und 56 stehen hydraulisch über eine Drosselleitung 58 miteinander in Verbindung. Die Drosselleitung 58 unterstützt das Strömungsteiler- bzw. Strömungsvereinigerventil 50 darin, den Hydraulikdurchfluß in den Leitungen 54 und 56 auszugleichen.

Die untere Öffnung der Pumpe 48 ist mit einer verzweigten Speise/Rückführungsleitung 60 verbunden, welche die Pumpe 48 mit der zweiten Arbeitsöffnung der Hydromotoren 36 und 38 hydraulisch verbindet. Auf diese Weise entsteht ein geschlossener Hydraulikkreis zwischen der Pumpe 48 und den Hydromotoren 36 und 38, wobei letztere parallel zueinander geschaltet sind.

Bei der Pumpe 48 handelt es sich um eine herkömmliche Axialkolbenpumpe mit einer winkelmäßig einstellbaren Taumelscheibe 62, auf die einseitig wirkende hydraulische Betätigungsorgane 64 und 66 einwirken, um die Taumelscheibe 62 aus einer mittleren Position heraus zu bewegen und dadurch eine Pumpwirkung der Pumpe 48 in Vorwärts- oder Rückwärtsrichtung zu erzeugen.

Ein pilot-betätigbares Richtungsumkehrventil 68 steht mit den Betätigungsorganen 64, 66 und einer Pumpe 70 in Verbindung. Es enthält einen Ventilschieber 72, der selektiv nach links oder rechts aus der dargestellten Neutralstellung heraus verschiebbar ist, um die Betätigungsorgane 64, 66 unter Druck zu setzen. Die Bewegung des Ventilschiebers 72 wird durch einen linearen elektro-hydraulischen Servomotor 74 gesteuert, welcher ein hin und her bewegbares Ausgangsglied 76 enthält, das mit dem Schieber 72 verbunden ist. Der Servomotor 74 ist ein handelsübliches Gerät, welches die Fähigkeit besitzt, das Ausgangsglied 76 nach Richtung und Größe in Übereinstimmung mit der Richtung und der Größe von elektrischen Steuersignalen zu verschieben, die der Servomotor 74 empfängt. Hierdurch wird eine automatische Steuerung des Servomotors 74 und folglich eine automatische Steuerung der Größe und Richtung der Verschiebung oder Verstellung der Pumpe 48 erreicht. Ein Feedbackgestänge 78 ist zwischen der Taumelscheibe 62 und dem Ventilschieber 72 angeordnet. Das Gestänge 78 wirkt dahingehend, den Schieber 72 in Abhängigkeit von der Bewegung der Taumelscheibe 62 in eine neue Stellung, und zwar unter den Befehlen des Servomotors 74, zurückzubewegen.

4

Es ist ein Hydraulikkreislauf mit einer Ventilanordnung 80 vorgesehen, der dazu dient, das Arbeitsfluid der Hydromotoren 36, 38 den Kupplungen 40, 42 zu deren Betätigung zuzuführen. Die Ventilanordnung 80 enthält vier elektromagnetisch betätigbare Kupplungsventile mit zwei Positionen 82, 84, 86 und 88, welche das Arbeitsfluid wahlweise den Hydraulikkupplungen 40, 42 zuführen. Die Ventile 82 und 84 bilden ein erstes Ventilpaar, durch welches der Zufluß des Arbeitsfluids zu der Hydraulikkupplung 40 gesteuert wird, während die Kupplungsventile 86 und 88 ein zweites Ventilpaar bilden, durch welches selektiv die Kupplung 42 mit Arbeitsflüssigkeit versorgt werden kann. Die Kupplungsventile 82 und 88 sind Vorwärtsfahrt-Kupplungsventile und werden benutzt, um die Arbeitsflüssigkeit während der Vorwärtsfahrt des Fahrzeuges 10 zu den Kupplungen 40, 42 zu leiten, wohingegen die Kupplungsventile 84 und 86 verwendet werden, um die Arbeitsflüssigkeit während einer Rückwärtsfahrt des Fahrzeugs 10 zu den Kupplungen 40, 42 zu leiten. Die Kupplungsventilanordnung enthält ferner zwei elektromagnetisch betätigbare Hydromotorventile 90, 92, durch welche wahlweise die Hydromotoren 36, 38 vom Hydraulikausgang der Pumpe 48 getrennt werden können. Die Ventilanordnung 80, die weiter unten im einzelnen erläutert wird, kann unabhängig betätigt werden, so daß die Pumpe 48 beide Hydromotoren simultan oder individuell antreiben kann. Ein individueller Antrieb wird bei einem Lenkmanöver des Fahrzeugs erforderlich.

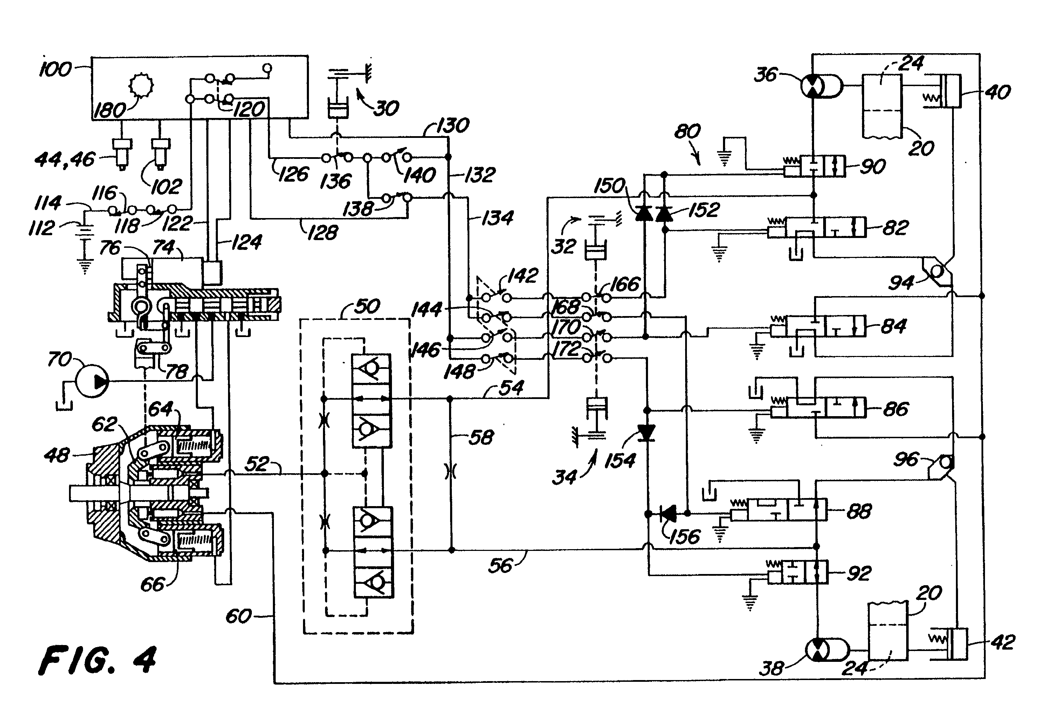

Die Ausgänge des Ventilpaares 82 und 84 stehen mit einem Wechselrückschlagventil 94 in Verbindung, von welchem aus Hydraulikflüssigkeit zu der Hydraulikkupplung 40 geleitet wird. In ähnlicher Weise stehen auch das Ventilpaar 86 und 88 mit einem Wechselrückschlagventil 96 in Verbindung, welches Hydraulikflüssigkeit zu der Kupplung 42 leitet. Alle Kupplungsventile und Hydromotorventile sind vorgespannt und befinden sich im Ruhezustand in Sperrstellung, siehe die Ventile 82, 84 und 86 sowie das Hydromotorventil 90 in Fig. 4. Werden die Magnetspulen der Kupplungsventile erregt, so werden die zugehörigen Ventilschieber verschoben, so daß das Arbeitsfluid auf die Kupplungsanordnung einwirken kann. In analoger Weise werden die Hydromotorventile verschoben, um den Weg des Arbeitsfluids zu den Hydromotoren freizugeben, sofern die Hydromotorventile erregt werden (siehe Fig. 2).

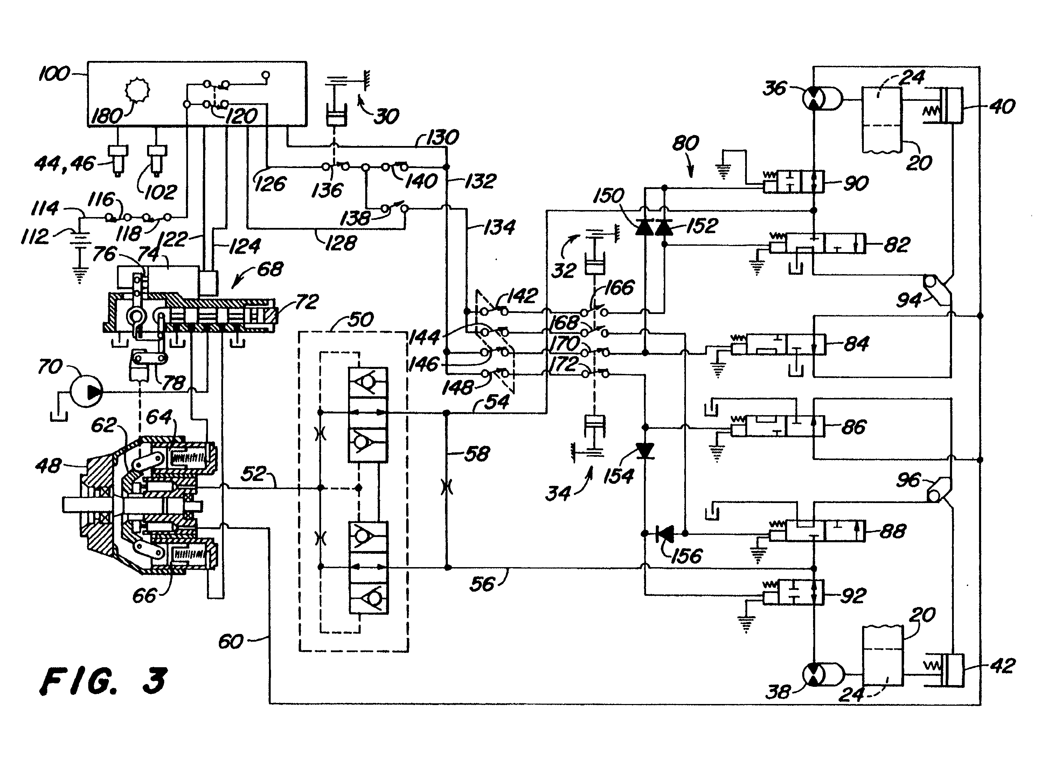

Aus Fig. 2 geht hervor, daß bei Geradeausfahrt in Vorwärtsrichtung des Fahrzeuges die Kupplungsventile 82 und 88 erregt und geöffnet sind, während die Kupplungsventile 84 und 86 geschlossen sind. Ferner sind bei gerader Vorwärtsfahrt die Hydromotorventile 90 und 92 erregt und erlauben somit den Durchfluß zu den Hydromotoren 36 und 38. Bei Rückwärtsfahrt (siehe Fig. 3) sind die Kupplungsventile 84 und 86 erregt, während die Ventile 82 und 88 nicht erregt sind. Hierbei sind wie bei der Vorwärtsfahrt die Hydromotorventile 90 und 92 ebenfalls erregt. Bei Ausführung einer Kurve bei Vorwärtsfahrt kommt der Schaltzustand, wie er durch Fig. 4 illustriert ist, zum Tragen. Das Kupplungsventil 88 ist erregt, während die Kupplungsventile 82, 84 und 86 geschlossen sind. Ferner ist das Hydromotorventil 92 erregt und das Hydromotorventil 90 geschlossen. Es ist hieraus ersichtlich, daß bei Kurvenfahrt nur der Hydromotor 38 das linke Zusatztreibrad 24 antreibt, und der Hydromotor 36 nicht in kraftschlüssiger Verbindung mit dem rechten Zusatztreibrad steht, welches sich daher frei bewegen kann.

Wie bereits erwähnt wurde, wird die Lage der Taumelscheibe 62 in der Pumpe 48 durch einen linearen elektro-hydraulischen Servomotor 74 gesteuert, wobei letzterer elektrisch mit einer elektronischen Steuereinrichtung 100 in Verbindung steht. Eine derartige Steuerung ist durch die US-PS 4,186,816 offenbahrt, so daß an dieser Stelle auf eine nähere Beschreibung verzichtet werden kann. Die Steuereinrichtung 100 steht elektrisch mit einem Geschwindigkeitssensor 102 des Haupttreibrades 22 in Verbindung, so daß die Geschwindigkeit des Haupttreibrades 22 durch die Steuereinrichtung 100 erfaßt werden kann. Es sei erwähnt, daß für den Fall, daß der Geschwindigkeitssensor 102 des Haupttreibrades 22 hinsichtlich des Kraftflusses hinter dem Kupplungsbremsensteuerungssystem 28 angeordnet ist, zwei Sensoren erforderlich sind, um sicherzustellen, daß die Geschwindigkeit der Haupttreibräder 22 auch während einer Kurvenfahrt erfaßt werden. Daher ist es wünschenswert, daß der Geschwindigkeitssensor 102 des Haupttreibrades 22 hinsichtlich des Kraftflußes vor dem Steuerungssystem 28 angeordnet ist, wo er die Ausgabe des Getriebes abtastet, bevor diese an das Kupplungsbremssystem angelegt wird. Die Steuereinrichtung 100 steht ferner mit Geschwindigkeitssensoren 44 und 46 der Zusatztreibräder 24 in Verbindung, welche an jedem der Zusatzräder angeordnet sind.

Aus Fig. 5 geht hervor, daß die beiden Sensoren 44, 46 mit der Steuereinrichtung 100 über einen Auswahlschalter 110 in Verbindung stehen, wobei der Auswahlschalter 110 durch das Kupplungsbremsensteuersystem 28 beeinflußt wird (siehe die gestrichelten Linien). Durch den Auswahlschalter 110 soll sichergestellt werden, daß die Steuereinrichtung 100 elektrisch mit dem Signal eines Zusatztreibrades 24 in Verbindung steht, welches die Laufbahn 20 antreibt und nicht mit einem Zusatztreibrad 28, das ausgekuppelt ist. Beispielsweise ist bei Linkskurvenfahrt der linke Hydromotor 36 nicht in Eingriff, und nur der rechte Hydromotor 38 treibt zusammen mit dem Antrieb der Haupttreibräder 22 die rechte Laufbahn 20 an. In diesem Fall würde der Auswahlschalter 110, sofern er mit dem linken Radsensor 46 in Verbindung steht, automatisch umgeschaltet, um die Steuereinheit 100 mit dem rechten Radsensor 44 zu verbinden und somit die Steuereinrichtung 100 mit dem Geschwindigkeitssignal eines angetriebenen Rades zu versorgen.

Die Steuereinrichtung ist mit einer elektrischen Spannungsquelle 112, beispielsweise einer Batterie, durch eine elektrische Leitung 114 verbunden. In dieser Leitung 114 liegen ein Zündschalter 116 und ein Gangschaltungsstellungsschalter 118 in Reihe. Der Zündschalter 116 wird durch die Zündung betätigt, und der Gangschaltungsstellungsschalter 118 wird durch den Gangschalthebel des Getriebes ausgelöst. Der Zündschalter 116 stellt sicher, daß die Steuereinrichtung 100 nicht in Betrieb genommen wird, ohne daß der Motor 17 eingeschaltet ist. Der Gangschaltungsstellungsschalter 118 stellt dagegen sicher, daß das Zusatztreibsystem nur bei bestimmten Gängen in Gang gesetzt wird. Die Steuereinrichtung 100 enthält einen An/Aus-Schalter 120, der von einer Bedienungsperson betätigbar ist, um das Zusatzantriebssystem in Betrieb zu nehmen.

Die Steuereinrichtung 100 steuert über elektrische Leitungen 122 und 124 den linearen elektro-hydraulischen Servomotor 74. Ferner steht der An/Aus-Schalter 122 elektrisch mit der elektrischen Leitung 126 in Verbindung. An die Steuereinrichtung 100 ist auch eine Signalleitung 128, welche Signale bei Vorwärtsfahrt übermittelt, und eine Signalleitung 130, welche Signale bei Rückwärtsfahrt übermittelt, angeschlossen. Die elektrische Leitung 126 teilt sich in eine Vorwärtsfahrtleitung 132 und eine Rückwärtsfahrtleitung 134 auf. Die Hauptkupplung 30 steht mit einem druckempfindlichen Schalter 136 in Verbindung, welcher in die elektrische Leitung 126 eingefügt ist, um die Ventilanordnung entsprechend der Betätigung der Hauptkupplung 30 mit Strom zu versorgen bzw. den Stromfluß zu unterbrechen. In die Vorwärtsfahrleitung 132 und die Rückwärtsfahrleitung 134 sind jeweils Schalter 138 bzw. 140 eingefügt, welche mit dem Schaltgestänge des Getriebes in Verbindung stehen, um festzustellen, ob das Raupenfahrzeug 10 sich in Vorwärts- oder Rückwärtsfahrweise befindet.

Die Vorwärtsfahrleitung 132 und die Rückwärtsfahrleitung 134 verzweigen sich weiter in elektrische Verzweigungsleitungen 158, 160, 162 und 164, in welchen gewöhnlicherweise geschlossene Bremspedalschalter 142, 144, 146 und 148 lie gen. Die Bremspedalschalter 142, 144, 146 und 148 sind vorgesehen, um die Ventilanordnung wahlweise in Abhängigkeit der Kurvenfahrt des Fahrzeuges zu betätigen. Fährt das Fahrzeug bei Vorwärtsfahrt eine Rechtskurve, so ergibt sich eine Ventilstellung, wie sie in Fig. 4 dargestellt ist. Bei dieser Fahrweise wird die rechte Laufbahn abgebremst, wobei sich die normalerweise geschlossenen Schalter 142 und 146 öffnen und das Kupplungsventil 82 sowie das Hydromotorventil 90 von der Stromquelle trennen. Auf diese Weise wird der Zusatzhydromotor 36 einerseits von dem rechten Zusatztreibrad durch stromlos machen des Kupplungsventils 82 und andererseits von der Pumpe 48 durch stromlos machen des Hydromotorventils 90 getrennt. Obwohl die Schalter 142, 144, 146 und 148 als Bremspedalschalter beschrieben wurden, können sie auch Bestandteil eines Steuerungssystems für ein Raupenfahrzeug sein, welches keine gesonderten Kupplungs-Brems-Betätigungsorgane enthält.

Die Hydromotorventile 90 und 92 stehen mit dem elektrischen Steuerkreis über die Dioden 150, 152, 154 und 156 in Verbindung, die einerseits die Kupplungsventilpaare voneinander elektrisch isolieren und andererseits gegebenenfalls die Zuführung elektrischer Signale zu den Hydromotorventilen sicherstellen.

In den elektrischen Verzweigungsleitungen 158, 160, 162 und 164 sind ferner druckempfindliche Schalter 166, 168, 170 und 172 eingefügt, die entweder durch die Vorwärtsfahrtkupplung 32 oder die Rückwärtsfahrtkupplung 34 betätigt werden.

Die Steuereinrichtung 100 kann verwendet werden, um ein Zusatztreibrad 24 etwas langsamer anzutreiben als die Haupttreibräder 22 bei Vorwärtsfahrt. Es ist wünschenswert, daß die Zusatztreibräder 24 bei Vorwärtsfahrt bei einer Geschwindigkeit angetrieben werden, die etwas kleiner ist als die der Haupttreibräder 22, und beispielsweise zwischen 97 und 99% der Antriebsgeschwindigkeit der Haupttreibräder 22 liegt. Beginnen bei Vorwärtsfahrt die hinteren Treibräder hinsichtlich des Riemens durchzurutschen, so werden bei der beschriebenen Antriebsweise der Zusatztreibräder diese in den Antrieb eingreifen und eine verbesserte Zugkraft liefern. Bei Rückwärtsfahrt ist es wünschenswert, daß die hinteren Räder aggressiver angreifen und entweder bei 100% der Geschwindigkeit der Haupttreibräder oder etwas darüber in einem Bereich zwischen 100 und 101% angetrieben werden.

Die Steuereinrichtung, die in der US-PS 4,186,816 näher erläutert ist und auf die hier zum Zwecke der Offenbarung Bezug genommen werden soll, kann entweder in einem normalen oder in einem aggressiven Modus betrieben werden. Die Auswahl des Modus kann durch den Steuerschalter 180 der Steuereinheit 100 vorgenommen werden. Indem der Steuerschalter 180 elektrisch mit der Eingangssignalleitung 128 für den Vorwärtsantrieb und der Eingangssignalleitung 130 für den Rückwärtsantrieb verbunden wird, kann die Umschaltung des Steuerschalters 180 automatisch erfolgen, indem die Schaltgestängeschalter 138 und 140 betätigt werden. Auf diese Weise läßt sich die Steuereinrichtung 100 bei Vorwärtsfahrt im normalen Modus und bei Rückwärtsfahrt in dem aggressiven Modus betreiben.

Das hier beschriebene System kann dahingehend modifiziert werden, daß eine Freilaufkupplung zwischen einem Hydromotor und dem zugehörigen Treibrad Anwendung findet. Ferner kann ein digitales Steuersystem gemäß der US-PS 4,546,844 und US-PS 4,635,743 Anwendung finden.

## Patentansprüche

1. Raupenfahrzeug (10) mit Antrieb (17) und Getriebe (29), welche wenigstens eine als Endlosriemen ausgebildete Riemenlaufbahn (20) mit Hilfe wenigstens eines mit der Riemenlaufbahn (20) in reibendem Eingriff stehenden Haupttreibrades (22) antreiben, und mit wenigstens einem Zusatztreibrad (24), welches ebenfalls antreibbar ist und mit der Riemenlaufbahn (20) in reibendem Eingriff steht, dadurch gekennzeichnet, daß eine vom Antrieb (17) angetriebene Hydraulikpumpe (48), wenigstens ein mit der Hydraulikpumpe (48) in Verbindung stehender Hydromotor (36, 38) zum Antrieb des wenigstens einen Zusatztreibrades (24) und eine Steuereinrichtung (100) zur Steuerung der Förderleistung der Hydraulikpumpe (48) derart, daß der wenigstens eine Hydromotor (36, 38) das wenigstens eine Zusatztreibrad (24) mit einer von der Haupttreibradgeschwindigkeit abweichenden Geschwindigkeit antreibt, vorgesehen sind.

2. Raupenfahrzeug nach Anspruch 1, dadurch gekennzeichnet, daß die Hydraulikpumpe eine reversible Verstellpumpe (48) ist.

3. Raupenfahrzeug nach Anspruch 1 oder 2, dadurch gekennzeichnet, daß die Antriebsgeschwindigkeit des Zusatztreibrades (24) kleiner ist als die Antriebsgeschwindigkeit des Haupttreibrades (22).

4. Raupenfahrzeug nach Anspruch 3, dadurch gekennzeichnet, daß die Antriebsgeschwindigkeit des Zusatztreibrades (24) zwischen 97 und 99% der Drehzahl des Haupttreibrades (22) beträgt.

5. Raupenfahrzeug nach Anspruch 3 oder 4, dadurch gekennzeichnet, daß zwei Haupttreibräder (22) zwei Zusatztreibräder (24), zwei mit der Hydraulikpumpe (48) in Verbindung stehende Hydromotoren (36, 38) zum Antrieb der Zusatztreibräder (24), zwei als Endlosriemen ausgebildete Riemenlaufbahnen (20), die in reibendem Eingriff mit jeweils einem Haupttreibrad (22) und einem Zusatztreibrad (24) stehen, und einer Steuereinrichtung (100) vorgesehen sind, wobei die Steuereinrichtung (100) die Förderleistung der Hydraulikpumpe (48) derart steuert, daß die Zusatztreibräder (24) mit einer geringeren Geschwindigkeit als die Haupttreibräder (22) angetrieben werden.

6. Raupenfahrzeug nach einem der Ansprüche 1 bis 5, dadurch gekennzeichnet, daß die Steuereinrichtung die Förderleistung der Pumpe (48) derart beeinflußt, daß der wenigstens eine Hydraulikmotor das wenigstens eine Zusatztreibrad (24) bei Vorwärtsfahrt mit einer geringeren Geschwindigkeit als die Haupttreibradgeschwindigkeit und bei Rückwärtsfahrt mit einer Geschwindigkeit, die gleich der Haupttreibradgeschwindigkeit oder größer als diese ist, antreibt.

7. Raupenfahrzeug nach einem der Ansprüche 1 bis 6, dadurch gekennzeichnet, daß Entkopplungsmittel (40, 42) vorgesehen sind, die jeweils einen Hydromotor (36, 38) von dem zugehörigen Zusatztreibrad (24) trennen, wenn das Fahrzeug (10) eine Kurve fährt.

8. Raupenfahrzeug nach einem der Ansprüche 1 bis 7, dadurch gekennzeichnet, daß zwischen der Hydraulikpumpe (48) und wenigstens einem Hydromotor (36, 38) eine Ventilanordnung (80) vorgesehen ist, durch die sich wenigstens ein Zusatztreibrad (24) mit dem zugehörigen Hydromotor (36, 38) koppeln oder entkoppeln läßt.

9. Raupenfahrzeug nach einem der Ansprüche 1 bis 8, dadurch gekennzeichnet, daß jedem Hydromotor (36, 38) eine Hydraulikkupplung (40, 42) zugeordnet ist, welche durch eine Ventilanordnung (80) wahlweise hydraulisch mit dem Hydraulikausgang der Hydraulikpumpe (48) verbindbar ist.

10. Raupenfahrzeug nach Anspruch 9, dadurch gekennzeichnet, daß die Ventilanordnung (80) wenigstens zwei elektromagnetisch betätigbare Kupplungsventile (82, 84 ; 86, 88) enthält, wobei jedes Kupplungsventil (82, 84 ; 86, 88) eine der Kupplungen (40, 42) wahlweise mit dem Hydraulikausgang der Pumpe (48) hydraulisch verbindet.

11. Raupenfahrzeug nach Anspruch 9 oder 10, dadurch gekennzeichnet, daß die Ventilanordnung wenigstens zwei Paare mit elektromagnetisch betätigbaren Zwei-Positionen-Kupplungsventilen (82, 84 ; 86, 88) enthält, wobei jedes Ventilpaar (82, 84 ; 86, 88) mit einer Kupplung (40, 42) hydraulisch in Verbindung steht, um die entsprechende Kupplung (40, 42) wahlweise mit dem Hydraulikausgang der Pumpe zu verbinden.

12. Raupenfahrzeug nach Anspruch 11, dadurch gekennzeichnet, daß jeweils ein erstes Kupplungsventil (82, 88) jeden Paares den Hydraulikausgang der Pumpe (48) dann hydraulisch mit der zugehörigen Kupplung (40, 42) verbindet, wenn das Fahrzeug (10) vorwärts fährt, und daß jeweils ein zweites Kupplungsventil (84, 86) jeden Paares den Hydraulikausgang der Pumpe dann hydraulisch mit der zugehörigen Kupplung (40, 42) verbindet, wenn das Fahrzeug (10) rückwärts fährt.

13. Raupenfahrzeug nach Anspruch 11 oder 12, dadurch gekennzeichnet, daß die beiden Ventile (82, 84; 86, 88) eines Ventilpaares miteinander über ein Wechselrückschlagventil (94, 96) hydraulisch in Verbindung stehen.

14. Raupenfahrzeug nach einem der Ansprüche 1 bis 13, dadurch gekennzeichnet, daß eine Ventilanordnung (80) mit wenigstens zwei elektromagnetisch betätigbaren Hydromotorventilen (90, 92) vorgesehen ist, die jeweils einem Hydromotor (36, 38) zugeordnet und geeignet sind, die Verbindung zwischen Hydraulikausgang der Pumpe (48) und Hydromotor (36, 38) auf Anforderung zu sperren.

15. Raupenfahrzeug nach einem der Ansprüche 7 bis 14, dadurch gekennzeichnet, daß Lenkmittel zum Lenken des Fahrzeuges (10) vorgesehen sind, welche Richtungsschalter enthalten, die in den Stromkreisen der elektromagnetisch betätigbaren Kupplungsventile (82, 84, 86, 88) bzw. Hydromotorventile (90, 92) liegen und wahlweise einige der Ventile von der Stromquelle (112) trennen, wenn das Fahrzeug (10) eine Kurve fährt.

16. Raupenfahrzeug nach Anspruch 14 oder 15, dadurch gekennzeichnet, daß jedes Hydromotorventil (90, 92) elektrisch mit einem Paar der Kupplungsventile (82, 84 ; 86, 88) in einem Stromkreis derart gekoppelt ist, daß, wenn eines der Kupplungsventilpaare (82, 84 ; 86, 88) elektrisch erregt ist, auch das zugehörige Hydromotorventil (90, 92) an die Stromquelle (112) angeschlossen ist.

17. Raupenfahrzeug nach einem der Ansprüche 1 bis 16, dadurch gekennzeichnet, daß die Steuereinrichtung (100) wenigstens zwei Sensoren (44, 46) zur Erfassung der Geschwindigkeiten jedes der Zusatztreibräder (24) enthält.

18. Raupenfahrzeug nach Anspruch 17, dadurch gekennzeichnet, daß ein Auswahlschalter (110) vorgesehen ist, durch den zu jeder Zeit wahlweise lediglich das Ausgangssignal eines Geschwindigkeitssensors (44, 46) zur Beeinflussung der Steuereinheit (100) herangezogen wird.

19. Raupenfahrzeug nach Anspruch 18, dadurch gekennzeichnet, daß der Auswahlschalter (110) mit den Lenkmitteln elektrisch in Verbindung steht, und daß der Schaltzustand des Auswahlschalters (110) von dem Lenkzustand beeinflußbar ist.

## Claims

1. A tracked vehicle (10) with a drive (17) and gear (29) systems which drive at least one belt track (20) designed as endless belts with the help of at least one main drive wheel (22) engaging with the belt track (20), and with at least one additional drive wheel (24) which is likewise drivable and engages frictionally with the belt track (20), characterised in that there are provided a hydraulic pump (48) driven by the drive system (17), at least one hydraulic motor (36, 38) connected to the hydraulic pump (48) in order to drive the at least one additional drive wheel (24), and a control device (100) for controlling the conveying performance of the hydraulic pump (48) in such a way that the at least one hydraulic motor (36, 38) drives the at least one additional drive wheel (24) at a speed deviating from that of the main drive wheel.

2. A tracked vehicle according to Claim 1, characterised in that the hydraulic pump is a reversible variable-displacement pump (48).

3. A tracked vehicle according to Claim 1 or 2, characterised in that the drive speed of the additional drive wheel (24) is less than the drive speed of the main drive wheel (22).

4. A tracked vehicle to Claim 3, characterised in that the drive speed of the additional drive wheel (24) comes to between 97 and 99% of the rotational speed of the main drive wheel (22).

5. A tracked vehicle according to Claim 3 or 4, characterised in that there are provided two main drive wheels (22), two additional drive wheels (24), two hydraulic motors (36, 38) connected to the hydraulic pump (48) for driving the additional drive wheels (24), two belt tracks (20) in the form of endless belts, which are in frictional engagement respectively with a main drive wheel (22) and an additional drive wheel (24), and a control device (100), the control device (100) controlling the conveying performance of the hydraulic pump (48) in such a way that the additional drive wheels (24) are driven at a lower speed than the main drive wheels (22).

6. A tracked vehicle according to one of Claims 1 to 5, characterised in that the control device influences the conveying performance of the pump (48) in such a way that the at least one hydraulic motor drives the at least one additional drive wheel (24) during forward travel at a lower speed than that of the main drive wheel, and in reverse travel at a speed which is equal to or greater than that of the main drive wheel.

7. A tracked vehicle according to one of Claims 1 to 6, characterised in that uncoupling means (40, 42) are provided which respectively separate a hydraulic motor (36, 38) from the associated additional drive wheel (24), when the vehicle executes a bend.

8. A tracked vehicle according to one of Claims 1 to 7, characterised in that there is provided between the hydraulic pump (48) and at least one hydraulic motor (36, 38) a valve arrangement (80) by means of which at least one additional drive wheel (24) may be coupled with or uncoupled from the associated hydraulic motor (36, 38).

9. A tracked vehicle according to one of Claims 1 to 8, characterised in that there is associated with each hydraulic motor (36, 38) a hydraulic clutch (40, 42) which may be selectably hydraulically connected by a valve arrangement (80) with the hydraulic output of the hydraulic pump (48).

10. A tracked vehicle according to claim 9, characterised in that the valve arrangement (80) comprises at least two electromagnetically-activable clutch valves (82, 84 ; 86, 88), each clutch valve (82, 84 ; 86, 88) select-

8

ably hydraulically connecting one of the clutches (40, 42) with the hydraulic output of the pump (48).

11. A tracked vehicle according to Claim 9 or 10, characterised in that the valve arrangement comprises at least two pairs of electromagnetically-activable two-position clutch valves (82, 84 ; 86, 88), each pair of valves (83, 84 ; 86, 88) being hydraulically connected to a clutch (40, 42), in order selectably to connect the corresponding clutch (40, 42) to the hydraulic output of the pump.

12. A tracked vehicle according to Claim 11, characterised in that respectively a first clutch valve (82, 88) of each pair hydraulically connects the hydraulic output of the pump (48) to the associated clutch (40, 42), when the vehicle (10) is travelling forwards, and that respectively a second clutch valve (84, 86) of each pair hydraulically connects the hydraulic output of the pump to the associated clutch (40, 42), when the vehicle (10) is travelling in reverse.

13. A tracked vehicle according to Claim 11 or 12, characterised in that both valves (82, 84 ; 86, 88) of a pair of valves are hydraulically connected together by means of an alternating check valve (94, 96).

14. A tracked vehicle according to one of Claims 1 to 13, characterised in that there is provided a valve arrangement (80) with at least two electromagnetically-activable hydraulic motor valves (90, 92) which are respectively associated with a hydraulic motor (36, 38) and are capable of closing off the connection between the hydraulic output of the pump (48) and the hydraulic motor (36, 38) upon demand.

15. A tracked vehicle according to one of Claims 7 to 14, characterised in that there are provided steering means for steering the vehicle (10) containing direction switches incorporated in the circuits of the electromagnetically-activable clutch valves (82, 84, 96, 88) or hydraulic motor valves (90, 92), selectably separating some of the valves from the fluid course (112) when the vehicle (10) negotiates a bend.

16. A tracked vehicle according to Claim 14 or 15, characterised in that each hydraulic motor valve (90, 92) is electrically coupled to one pair of clutch valves (82, 84 ; 86, 88) in a circuit in such a way that when one of the pairs of clutch valves (82, 84 ; 86, 88) is electrically energised, the associated hydraulic motor valve (90, 92) is connected to the fluid source (112).

17. A tracked vehicle according to one of Claims 1 to 16, characterised in that the control device (100) comprises at least two sensors (44, 46) for detecting the speeds of each of the additional drive wheels (24).

18. A tracked vehicle according to Claim 17, characterised in that a selector switch (110) is provided, by means of which at any time only the output signal of one speed sensor (44, 46) is selectably used to influence the control unit (100).

19. A tracked vehicle according to Claim 18, characterised in that the selector switch (110) is electrically connected to the steering means, and that the switching condition of the selector switch (110) can be influenced by the steering condition.


## Revendications

1. Véhicule à chenilles (10) comportant un dispositif d'entraînement (17) et une transmission (29), qui entraînent au moins une courroie (20) réalisée sous la forme d'une courroie sans fin, à l'aide d'au moins une roue motrice principale (22) engrenant par frottement avec la courroie (20), et au moins une roue motrice supplémentaire (24), qui peut être également entraînée et engrène par frottement avec la courroie (20), caractérisé en ce qu'il est prévu une pompe hydraulique (48) entraînée par le dispositif d'entraînement (17), au moins un moteur hydraulique (36,38) raccordé à la pompe hydraulique (48) servant à entraîner la au moins une roue motrice supplémentaire (24) et un dispositif de commande (100) pour commander le débit de la pompe hydraulique (48) de telle sorte que le au moins un moteur hydraulique (36, 38) entraîne la au moins une roue motrice supplémentaire (24) à une vitesse qui diffère de la vitesse de la roue motrice principale.

2. Véhicule à chenilles selon la revendication 1, caractérisé en ce que la pompe hydraulique est une pompe réversible à cylindrée variable (48).

3. Véhicule à chenilles selon la revendication 1 ou 2, caractérisé en ce que la vitesse d'entraînement de la roue motrice supplémentaire (24) est inférieure à la vitesse d'entraînement de la roue motrice principale (22).

4. Véhicule à chenilles selon la revendication 3, caractérisé en ce que la vitesse d'entraînement de la roue motrice supplémentaire (24) est comprise entre 99% de la vitesse de rotation de la roue motrice principale (22).

5. Véhicule à chenilles selon la revendication 3 ou 4, caractérisé en ce qu'il est prévu deux roues motrices principales (22), deux roues motrices supplémentaires (24), deux moteurs hydrauliques (36, 38) raccordés à la pompe hydraulique (48) pour entraîner les roues motrices supplémentaires (24), deux courroies (20) réalisées sous la forme de courroies sans fin et engrenant par frottement respectivement avec une roue motrice principale (22) et une roue motrice supplémentaire (24), et un dispositif de commande (100), le dispositif de commande (100) commandant le débit de la pompe hydraulique (48) de sorte que les roues motrices supplémentaires (24) sont entraînées avec une vitesse inférieure à celle des roues motrices principales (22).

6. Véhicule à chenilles selon l'une des revendications 1 à 5, caractérisé en ce que le dispositif de commande influe sur le débit de la pompe (48) de manière que le au moins un moteur hydraulique entraîne la au moins une roue motrice supplémentaire (24), lors de la marche avant, avec une vitesse inférieure à la vitesse des roues motrices principales et, lors de la marche arrière, avec une vitesse égale ou supérieure à la vitesse des roues motrices principales.

7. Véhicule à chenilles selon l'une des revendications 1 à 6, caractérisé en ce qu'il est prévu des moyens de découplage (40, 42) qui séparent respectivement un moteur hydraulique (36, 38) de la roue motrice supplémentaire associée (24), lorsque le véhicule (10) franchit une courbe.

8. Véhicule à chenilles selon l'une des revendications 1 à 7, caractérisé en ce qu'entre la pompe hydraulique (48) et au moins un moteur hydraulique (36, 38), il est prévu un dispositif à soupapes (80), qui permet d'accoupler ou de désaccoupler au moins une roue motrice supplémentaire (24) au moteur hydraulique associé (36, 38).

9. Véhicule à chenilles selon l'une des revendications 1 à 8, caractérisé en ce qu'à chaque moteur hydraulique (36, 38) est associé un embrayage hydraulique (40, 42), qui peut être raccordé de façon hydraulique au choix, grâce à un dispositif à soupapes (80), à la sortie hydraulique de la pompe hydraulique (48).

10. Véhicule à chenilles selon la revendication 9, caractérisé en ce que le dispositif à soupapes (80) contient au moins deux soupapes d'accouplement à commande électromagnétique (82, 84 ; 86, 88), dont chacune raccorde au choix, par voie hydraulique, l'un des embrayages (40, 42) à la sortie hydraulique de la pompe (48).

11. Véhicule à chenilles selon la revendication 9 ou 10, caractérisé en ce que le dispositif à soupapes comporte au moins deux couples de soupapes d'accouplement à deux positions, à commande électromagnétique (82, 84, 86, 88), chaque couple de soupapes (82, 84 ; 86, 88) étant raccordé hydrauliquement à un embrayage (40, 42) pour raccorder au choix l'embrayage correspondant (40, 42) à la sortie hydraulique de la pompe.

12. Véhicule à chenilles selon la revendication 11, caractérisé en ce que respectivement une première soupape d'accouplement (82, 88) de chaque couple raccorde hydrauliquement la sortie hydraulique de la pompe (48) à l'embrayage associé (40, 42), lorsque le véhicule (10) avance et que respectivement une seconde soupape d'accouplement (84, 86) de chaque couple raccorde hydrauliquement la sortie hydraulique de la pompe à l'embrayage associé (40, 42), lorsque le véhicule (10) recule.

13. Véhicule à chenilles selon la revendication 11 ou 12, caractérisé en ce que les deux soupapes (82, 84 ; 86, 88) d'un couple de soupapes sont raccordées entre elles hydrauliquement par l'intermédiaire d'une soupape antiretour de sélection (94, 96).

14. Véhicule à chenilles selon l'une des revendications 1 à 13, caractérisé en ce qu'il est prévu un dispositif à soupapes (80) comportant au moins deux soupapes à commande électromagnétique (90, 92) de moteurs hydrauliques, dont chacune est associée à un moteur hydraulique (36, 38) et qui sont appropriées pour bloquer sur demande la liaison entre la sortie hydraulique de la pompe (48) et le moteur hydraulique (36, 38).

15. Véhicule à chenilles selon l'une des revendications 7 à 14, caractérisé en ce qu'il est prévu des moyens de direction servant à diriger le véhicule (10) et qui contiennent des interrupteurs de direction, qui sont situés dans les circuits des soupapes d'accouplement (82, 84, 86, 88) ou de soupapes (90, 92) de moteurs hydrauliques, à commande électromagnétique, et séparent au choix quelques-unes des soupapes de la source de courant (112) lorsque le véhicule (10) franchit une courbe.

16. Véhicule à chenilles selon la revendication 14 ou 15, caractérisé en ce que chaque soupape (90, 92) d'un moteur électrique est accouplée électriquement à un couple des soupapes d'accouplement (82, 84, 86, 88) dans un circuit de sorte que, lorsque l'un des couples de soupapes d'accouplement (82, 84 ; 86, 88) est excité électriquement, de même la soupape associée (90, 92) du moteur hydraulique est raccordée à la source de courant (112).

17. Véhicule à chenilles selon l'une des revendications 1 à 16, caractérisé en ce que le dispositif de commande (100) contient au moins deux capteurs (44, 46) pour détecter les vitesses de chacune des roues motrices supplémentaires (24).

18. Véhicule à chenilles selon la revendication 17, caractérisé en ce qu'il est prévu un commutateur de sélection (110), grâce auquel on utilise à tout moment au choix uniquement le signal de sortie d'un capteur de vitesse (44, 46) pour influer sur l'unité de commande (100).

19. Véhicule à chenilles selon la revendication 18, caractérisé en ce que le commutateur de sélection (110) est raccordé électriquement aux moyens de direction et que l'état de commutation du commutateur de sélection (110) peut être influencé par l'état de braquage.

FIG. 1

FIG. 5

FIG. 2

EP 0 337 111 B1

**FIG. 3**

EP 0 337 111 B1

FIG. 4